# EUROPEAN PATENT SPECIFICATION

(11) **EP 2 159 305 B1**
(45) Date of publication and mention of the grant of the patent: **17.02.2016**
(21) Application number: 09447038.2
(22) Date of filing: 10.08.2009
(51) Int. Cl.: D01F 1/10, A63B 51/02

(54) **Polymer string**
Polymersaite
Corde en polymère

(30) Priority: 14.08.2008 BE 200800451
(43) Date of publication of application: 03.03.2010
(73) Proprietor: Luxilon Industries, naamloze vennootschap, 2110 Wijnegem (BE)
(72) Inventor: Van Malderen, Dominique, 2970 Schilde (BE)
(74) Representative: Donné, Eddy

(56) References cited:
- WO-A-00/62994
- WO-A-02/083769
- WO-A-2006/018026
- JP-A- 2006 255 069
- US-A- 4 450 250
- US-A- 5 601 762
- US-B1- 6 655 076

## Description

The present invention concerns a polymer string.

This mainly includes, but is not limited to, a polymer string that can be used for stringing rackets for ball sports such as for example tennis, squash, racket ball, badminton, and the like.

Such a string can however also be applied to the fishing sport, to musical instruments, etcetera.

The invention also concerns a method for manufacturing such a string.

Within this context there are already various types of strings that have been marketed either in the shape of a monofilament, or multifilament, or bi-component string.

Combinations of various string types exist as well.

For example, in case of the so-called 'hybrid strings', it is known to use monofilament strings for the stringing of a tennis racket lengthwise, and multifilament strings for stringing thereof widthwise.

The various string types all have their typical characteristics, always with their specific advantages and disadvantages.

These are not limited to the typical physical, chemical, or sensory characteristics, but are also situated in the field of the playing characteristics.

Ball control for example is better when playing softly with a multifilament string, whereas when playing hard the monofilament string on the other hand allows for a better control.

There is, for example, known a monofilament string for tennis rackets of the company Monofil-Technik GmbH, as it is described in DE 199 31 860.

This string is produced in an extrusion process, starting from a molten mixture of a thermoplastic polyester with a thermoplastic polyester elastomer as the base material.

To this end one selects as thermoplastic elastomer for example an elastomer polyether ester or a co-polyether ester, the latter being constructed from a sequence of segments of polybutylene terephthalate and polytetrahydrofurane respectively.

The thermoplastic polyester can then, for example, consist of polyethyleneterephthalate or poly (1,4 cyclohexane dimethyleneterephthalate).

To 100 weight parts of thermoplastic polyester, for example between 4 to 50 weight parts of thermoplastic polyester elastomer are added in molten condition in order to obtain the intended characteristics.

The final practical string thickness for applications in tennis rackets amounts to 1.2 to 1.4 mm after extrusion and stretching, which is quite a lot.

With this type of string the playing characteristics are largely determined by the diameter, reaching from elastic to durable.

Such strings are generally relatively stiff and tend to lose their tension quickly, as a result of which the control diminishes and the string feels 'dead'.

On the other hand for example US 2001/0035002 describes a polymer string for tennis rackets that is implemented as a multifilament string and which is characterised by an increased resistance to friction.

To this end a central bundle of polymer filaments is then started from that can be composed of various polymers. These filaments are embedded in and surrounded by a matrix consisting of nylon or polyurethane, in which between 11 and 50 weight percent PTFE particles are dispersed homogeneously.

The reduction of the adhesion between the various constituting parts, especially between the PTFE particles and the surrounding matrix, can, under certain playing circumstances, cause certain forms of delamination or defoliation of the string, as a result of what its useful life span is shortened and the characteristics tend to deteriorate.

Also known, for example from US 2003/0145574 and US 6,009,699 are the composite strings for tennis rackets, consisting of a combination of twisted-pair mono and multifilaments, in which the monofilaments show at least one flat side, whereas the multifilaments are round in cross section, and they are applied in a spiral shaped structure around the longitudinal axis of the string, and in which the whole construction is finally surrounded by and held together by a matrix consisting of polyurethane.

This matrix is applied as a solution in a solvent, upon which the solvent needs to be evaporated. Subsequently, the string is pulled through a calibrating opening in order to adjust the string thickness, and after it has hardened, it will be stretched and folded under a sharp angle, in order to regain a delamination of the composite components and to make the central monofilaments appear through the transparent polyurethane matrix.

The ultimate objective of this is that the stiffer monofilaments, after wearing of the surrounding polyurethane matrix, will be at the surface of the string, in order to form points of contact with the adjacent strings during the further useful lifespan of the string.

The method that was used is rather complicated and therefore expensive, and furthermore shows other disadvantages in the fields of the environment and safety.

All these designs according to the state of the art however have the disadvantage that the desired characteristics of the produced string can only be adjusted within narrow limits, or are strongly susceptible to changes as a result of mechanical wear or other unfavourable influences.

Due to these and other reasons, these strings are therefore produced rather thick, which in turn has a negative influence on the playing characteristics.

It is commonly known that a soft stringing of the racket, in combination with a thin string with optimised elasticity provides a faster ball speed, as a result of which less force is needed in order to return the ball.

Thinner strings provide 'more power', more 'spin', and more 'feeling' as it is called in professional terms.

Also, it is known that stiffer and thicker strings are less suitable for the prevention of elbow, arm, or shoulder problems, because they are less elastic, less shock absorbing, and give in less than strings with a smaller diameter.

It is therefore a normal procedure that by prior incorporation of various additives in polymeric materials one tries to further improve or expand the useful field of application and life span of such strings, as well as their playing characteristics.

In this context the use of aliphatic di-esters created from phthalic acid or phthalic acid anhydride and an alkanol that is either branched or unbranched, added in molten form to the polymer or the polymer mixture, before the actual extrusion of the string is carried out.

Current examples of such additives are, amongst others: bis(2-ethylhexylphtalate (DEHP), diisononylphthalate (DINP), dibutylphthalate (DBP), di-ethylphthalate (DEP), dimethylphthalate (DMP), di-n-hexylphthalate (DUP),din-octylphthalate (DnOP, di-isodecylphthalate (DIDP), and related compounds.

A known disadvantage of these aliphatic diesters is however, that mostly high melting temperatures have to be used and longer mixing times have to be observed in order to fully include these compounds in the respective polymer or the polymeric mixture and to spread them homogeneously.

This high melting temperature and these long mixing times can in turn then create health problems for the employees.

The used additives under the respective production circumstances, are namely characterised by a higher volatility, and thus possess an inherently higher degree of toxicity.

Therefore, during the processing specific preventive measures with regard to personal protection and/or with regard to general safety have to be taken, which inevitably has to be regarded as an additional disadvantage.

Also, the high processing temperature and the longer mixing times tend to result in an undesired thermal load of the molten mixture itself, with possible degradation of decolouration of the temperature- or oxidation sensitive ingredients as a direct result, coupled with increased chemical-physical wear of the processing and production means.

A known disadvantage is also that these aliphatic diesters or related compounds tend to influence the compatibility of the various ingredients or components with each other in a negative sense.

This can, as is commonly known, then also result in a premature ageing of the produced string because of increased loss of elasticity or by delamination or defoliation of the composing parts or by sweating out the additives in function of time under the influence of external factors.

Summarising, one could state that regardless of the type of polymer string and despite of the usual incorporation of additives, for example on the basis of di-alkyl esters of phthalic acid, the desired stable playing characteristics such as 'durability', comfort, spin, ball feeling, performance, etc. in accordance with the state of the art can only be obtained by offering strings with a relatively large diameter and/or of greater complexity.

For the production often lenghty and complex, and therefore expensive processes have to be used, with a certain inherent toxicity risk, high energy use, higher use of materials, high waste percentage, higher burden on the environment, higher emission of greenhouse effect gasses, and the like.

Creating a thinner string with more stable characteristics, long useful life span, and this according to a simple processing method, is therefore a very desirable, but at the current state of the art still not completely achieved target.

The present invention has the objective to offer a solution to the aforementioned and other disadvantages, more precisely a thinner string with more stable characteristics and better playing characteristics, that can moreover be processed by a simple process, because it provides for a polymer string, mainly but not necessarily, only consisting of one or several polymers, at which at least one polymer consists of thermoplastic material, in which at least one alkyl-benzyl ester of a 1,2 dicarboxylic acid of one of its derivates, is homogeneously distributed, in which the alkyl chain of the alkyl-benzyl ester or one of its derivates consists of at least five carbon atoms and at which use is made of a concentration between 0.1 to 5 percent by weight, better between 0.3 to 4 percent by weight, or even better between 0.3 and 1.2 percent by weight.

A remarkable advantage of a string according to the invention is that the standard deviation of its physical characteristics, especially its loop strength, is strongly narrowed, whereas the absolute value of it has increased.

This allows for obtaining more stable characteristics and better playing characteristics of the string, by decreasing the diameter of the string and thus also realise optimal ball control in combination with a high performance.

Another advantage is that considerable savings in raw materials and energy use can be realised due to the fact that the diameter of the strings can be markedly reduced, whilst maintaining ample sufficient tensile strength to guarantee a minimum life span.

Also, because of the smaller standard deviation on the mechanic characteristics, less waste and in connection to that, less raw materials and energy use are concerned, together with lower costs in order to dispose of the waste materials.

A further remarkable advantage of the invention is that the inventor succeeded to also have made these alkyl-benzyl esters or their derivates, that are mainly compatible with PVC or PVC-like materials or acrylates, compatible with polymers that were previously regarded as incompatible with, or with limited compatibility for this family of compounds.

This allows for the creation of polymer strings according to the invention that are mainly constructed of one or several polymers or polymer mixtures selected from one or several of the following groups of polymers or polymer families: PET, co-PET, PLA, PBT, PPT, PA and/or co-polymers of these materials, PEEK, PPS, polyether-polyester block polymer, polyether-polyamide block polymer, TPU, PVDE and/or other fluoropolymers.

The invention also provides a process for the production of such a string in which the alkylbenzyl ester prior to at least one molten polymer or polymer mixture for the creation of a homogeneous thermoplastic mixture is added in order to extrude, either one at a time or together with other polymers or polymer mixtures in accordance with a desired pattern.

The extruded mixture is then cooled for the creation of the string, which is then stretched, and subsequently relaxed again, in order to be coiled on a bobbin or something similar.

The thus produced string can, when the need arises, also be subjected to a surface treatment, for example to a plasma treatment, for the improvement or adjustment of the surface characteristics.

At this stage, useful use is made of the lower melting temperature of the stated alkyl-benzyl esters or their derivates and of their rheology modifying effect on the melting and of their lower toxicity upon processing.

Therefore, because of the latter, no specific protective measures have to be taken during processing, neither with regard to personal protection, nor with regard to general safety measures.

Furthermore, this process according to the invention allows to adjust the compatibility of the various constituting parts better to each other, so that delamination or defoliation of materials, fillers, additives and the like that cannot be fully mixed with each other can be limited to a minimum under the most unfavourable playing conditions or influences from the outside.

A huge advantage of the invention at this stage is that the processing characteristics of the constituting polymers or polymer mixtures in a molten state, followed by the extrusion process and an enhancement of the string and the final characteristics of the string, can be adjusted and optimised in a simple manner, and even in a far wider range than was deemed possible so far.

Another remarkable advantage is that the processing temperature and the total mixing hours can be limited, which is not only time and energy saving and more environmentally friendly, but also has a positive influence on the temperature sensitive ingredients that will be less subjected to decolouration or deterioration.

At the same time, the production means will be subjected to less aggressive circumstances and shorter production times, which also entails a prolongation of their useful lifespan and a reduction of the maintenance or repair sessions.

A further remarkable advantage is that due to the stricter standard deviation of the physical and chemical characteristics, a better control and adjustment of the processing parameters is possible, which in turn results in the fact that less adjustment is necessary, and that savings on raw materials and energy use and a decrease of the waste and the waste processing percentage are realised.

The latter can be achieved by making use of the process according to the invention, as a result of which it is reduced with at least 10%.

With the intention to better demonstrate the characteristics of the invention, below as an example without any limiting nature, a preferential implementation design is described of a string according to the invention, under reference to Table 1 that is included (see Figure).

Futhermore, the physical characteristics of three standard strings A, B, C, implemented according to the state of the art, and in which classical diphthalic acid esters are used as additives, are compared with those obtained from a string of the same diameter, but constructed and produced according to the invention.

In Table 1 the comparison is made of a standard produced monofilament string A and/or B, and a bi-component string C, in each case with the same string in which as an alkylbenzyl ester the C7-C9 alkyl ester is used with a mixture of branched or unbranched aliphatic chains, according to the invention, mainly consisting of isononyl-benzyl phthalate however.

The physical characteristics such as elasticity modulus, tensile strength, loop strength and standard deviation of the values of the loop strength, are indicated on the basis of the string type (monofilamentous A, B, or bi-component C) and according to the percent by weight of isononyl-benzyl phthalate that was added.

The standard monofilament string has a diameter of 1.25 mm.

Table 1 shows the various values that were measured of the modulus, tensile strength, and loop strength, as well as the standard deviation of the latter.

The values for a string that contains, according to the invention, an alkylbenzyl ester or a derivate thereof, more specifically isononylbenzylphthalate, in a concentration of 0.3 percent by weight and at the same string diameter, are subsequently displayed in there.

A clear reduction of the standard deviation can be observed for the loop strength (from 100 down to 20) and a slightly higher elasticity modulus (from 4200 MPa to 4500 MPa), in comparison with the standard string A that does not contain alkyl-benzyl ester or a derivate thereof.

In a further example, the diameter of the standard monofilament string A is reduced from 1.25 mm to 0.99 mm, which is now indicated by referring to string B.

The following values are encountered as a typical result.

A standard string without alkylbenzyl ester or a derivate thereof was not usable with a diameter of 0.99 mm, since not only the tensile strength was too low (421 N), but also furthermore the loop strength was also too weak (495 N) and the standard deviation (130) too large.

For the string that contains the alkyl-benzyl ester or a derivate thereof according to the invention, the values were measured at two concentrations, with 0.3 and 0.9 percent by weight respectively.

At 0.3 percent by weight, the tensile strength still turned out to be low (413 N), whilst still being a good modulus (4754 MPa), a better loop strength (600 N) and a narrower standard deviation (40) were encountered.

Finally, at 0.9 percent by weight it turned out that the encountered parameters complied (modulus 5000 MPa), at almost equal tensile strength (417 N), but we encountered an improved loop strength (694 N) and a very narrow spread (25) of the latter.

In case of a standard bi-component string C, as an example chosen and with a diameter of 1.25 mm, we obtain a similar picture.

Incorporation of 1 percent by weight of isononyl-benzyl ester according to the invention, especially results in a higher loop strength (940 N compared to 899 N) at a remarkably stricter standard deviation of the latter (45 instead of 100).

The conclusion of the measurements that were displayed as a means of an example and to clarify the invention, can be summarised as follows.

With a standard monofilament string having a diameter of 1.25 mm, the use of the alkylbenzyl ester (ABPt) or a derivate thereof, especially isononylbenzyl phthalate, a comparable or higher tensile strength and modulus can be observed than with a string that was constructed in accordance with the current state of the art, and it furthermore has a narrower standard deviation of the physical and chemical basic characteristics.

With the string having a diameter of 0.99 mm that contains, in accordance with the current state of the art, an alkylbenzyl ester or a derivate thereof, the preset values were never obtained.

On the other hand, for the string having a diameter of 0.99 that, according to the invention, contains 0.3 percent by weight of alkyl-benzyl ester or a derivate thereof, especially isononyl-benzyl phthalate, still a part of the quality requirements were complied with, with especially a very narrow standard deviation of the loop strength as the main characteristic.

With the string having a diameter of 0.99 mm that, according to the invention, containing 0.9 percent by weight of alkyl-benzyl ester or a derivate thereof, especially isononyl-benzyl phthalate, all quality requirements were complied with however, also combined with a considerably narrower standard deviation of the loop strength as the main characteristic.

This all demonstrates that according to the invention a thinner string, with improved processing characteristics, together with improved physical and playing characteristics is realised, furthermore provided with the additional advantages as stated above.

With the intention to better demonstrate the characteristics of the invention, below as an example without any limiting nature, a preferential process is described for the production of a string according to the invention.

Thus, the polymer string is produced according to the invention by means of a so-called melt-spinning process.

This means that the polymer or the polymer mixture is first molten, and subsequently spun into a thread on an extrusion installation.

The alkylbenzyl ester or its derivative, especially isononylbenzyl phthalate, is mixed mechanically into the molten polymer or the polymer mixture in a mixing vessel, so that a uniform distribution is obtained accross the whole batch.

Since the alkylbenzyl ester or a derivativ thereof that was used according to the invention has, under the respective processing circumstances only a limited or no toxic effect, contrary to the di-alkyl esters of phthalic acid used in accordance with the current state of the art, no specific precautionary or protective measures are necessary when mixing in the alkylbenzyl ester, or of a derivative thereof in the polymer compound or during the subsequent extrusion thereof.

The concentration of the alkylbenzyl ester or its derivatives, especially isononylbenzyl phthalate, consists at that of 0.1 to 5 percent by weight, preferably 0.3 to 1.2 percent by weight.

The extrusion installation classically consists of an extruder with dosing unit, extruder screw, jacket with various temperature zones, spinning pump, filter and spinning plate.

The molten material will then, after having been extruded, end up in a cooling installation, consisting of a waterbed in the case of monofilaments and bi-component monofilaments, or of a cooling shaft with cold air in the case of multifilaments and bi-component multifilaments.

After the cooling process a phase of stretching takes place by means of a rollers system. The stretching can range between 2 to 12 times, with a preference for 4 to 8 times.

After the stretching phase follows a short relaxation step, followed by coiling it around a bobbin.

This procedure according to the invention is in principle the same for both the extrusion and production of monofilament and of multifilament and/or bi-component strings and/or a combination of one or several thereof.

In case of bi-component strings it is preferred to operate with what in professional terms is indicated as an 'island in the sea' or 'core/sheet' types of designs.

An 'island in the sea' designs the string in principle consists of one or several polymers, mostly with a higher modulus, that can be regarded as cores, and that are embedded and kept in place by other polymers that serve as a matrix, and that generally speaking have a higher degree of elasticity.

The cross-section of the string displays the image that shows similarities to a multitude of 'little islands' spread in and surrounded by a component that is then called the 'sea component'.

'Core/sheet' types however, consist in principle of a string that is exclusively constructed of a core material with higher modulus that is then surrounded by a more flexible matrix.

If necessary the produced strings can still be subjected to a surface treatment, for example to a plasma treatment, for the adjustment or improvement of the surface characteristics, for example for printing.

The present invention is by no means limited to the preferred embodiments described as an example and/or method, but a string according to the invention and a method for manufacturing this can be realised in all shapes and sizes and in various ways, without leaving the scope of the claims.

## Claims

1. Polymer string mainly but not exclusively consisting of one or several polymers, **characterised in that** at least one polymer consists of a thermoplastic material, in which at least one alkyl-benzyl ester of a 1,2 dicarboxylic acid, or one of its derivates is distributed homogeneously, that the alkyl chain of the alkylbenzyl ester or of one of its derivatives, consists of at least five carbon atoms and that it is used in a concentration between 0.1 to 5 percent by weight, better between 0.3 to 4 percent by weight, and even better between 0.3 to 1.2 percent by weight.

2. Polymer string according to claim 1, **characterised in that** it is fully or partially constructed from thermoplastic polymers, in collaboration or not with thermoplastic elastomers, especially from one or several polymers from the following groups: PET, PLA, PBT, PPT, PA, PEEK, PPS, polyether-polyester block polymer, polyether-polyamide block polymer, TPU, PVDF, other fluorinated polymers, and/or co-polymers of one or several of these compounds.

3. Polymer string according to claims 1-2, **characterised in that** the alkyl-benzyl ester of the 1,2 carboxylic acid consists of a di-ester of phthalic acid or phthalic acid anhydride, with on one hand a benzyl group and on the other hand an alkyl group with 5 to 12 carbon atoms, in particular with 7 to 9 carbon atoms.

4. Polymer string according to one of the preceding claims, **characterised in that** the alkyl group of the alkyl-benzyl ester, or a derivative thereof, consists of a mixture of various isomers.

5. Method for manufacturing a polymer string according to one or several of the preceding claims, **characterised in that** the alkyl-benzyl ester is added in advance to at least one molten polymer or polymer mixture for the creation of a homogeneous thermoplastic mixture, wherein the alkyl-benzyl ester is added in a concentration between 0.1 to 5 percent by weight, even better between 0.3 to 4 percent by weight, even better between 0.3 to 1.2 percent by weight.

6. Method according to claim 5, **characterised in that** at least one polymer or polymer mixture is selected from the group of polymers consisting of PET, PLA, PBT, PPT, PA, PEEK, PPS, polyether-polyester block polymer, polyether, polyamide block polymer, TPU, PVDF, other fluorinated polymers, and/or copolymers of one or several of these compounds.

7. Method according to one of the claims 5-6 **characterised in that** the thermoplastic mixture is subsequently extruded and the extruded mixture is further cooled for the creation of a string, which is then stretched, and subsequently relaxed again, in order to finally be coiled on a bobbin or something similar.

8. Method according to one of the claims 5-7, **characterised in that** the produced string is finally subjected to a surface treatment, for example to a plasma treatment in order to improve or adjust the surface characteristics.
**TABLE 1**
| diameter (mm) | | **modulus (MPa)** | **tensile strength (N)** | **loop strength (N)** | **standard deviation** |
|---|---|---|---|---|---|
| 1,25 | **string A** | 4200 | 550 | 900 | 100 |
| | **string A + 0,3% ABPt** | 4500 | 527 | 885 | 20 |
| 0,99 | **string B** | 4351 | 421 | 495 | 130 |
| | **string B + 0,3% ABPt** | 4754 | 413 | 600 | 40 |
| | **string B + 0,9% ABPt** | 5000 | 417 | 694 | 25 |
| 1,25 | bicomponent string C | 3049 | 592 | 899 | 100 |
| | bicomponent string C+1% **ABPt** | 2551 | 499 | 940 | 45 |
| | | | | | |
|---|---|---|---|---|---|
| ABPt = alkylbenzyl phthalate | | | | | |

## Patentansprüche

1. Polymersaite, welche im Wesentlichen, jedoch nicht ausschließlich, aus einem oder mehreren Polymeren besteht, **dadurch gekennzeichnet, dass** mindestens ein Polymer aus einem thermoplastischen Material besteht, worin mindestens ein Alkylbenzylester einer 1,2-Dicarbonsäure oder eines seiner Derivate homogen verteilt ist, dass die Alkylkette des Alkylbenzylesters oder eines seiner Derivate aus mindestens fünf Kohlenstoffatomen besteht, und dass er in einer Konzentration von zwischen 0,1 und 5 Gewichtsprozent, besser zwischen 0,3 bis 4 Gewichtsprozent, und noch besser zwischen 0,3 bis 1,2 Gewichtsprozent, verwendet wird.

2. Polymersaite nach Anspruch 1, **dadurch gekennzeichnet, dass** sie vollständig oder teilweise aus thermoplastischen Polymeren aufgebaut ist, entweder im Zusammenwirken mit thermoplastischen Elastomeren oder nicht, insbesondere aus einem oder mehreren Polymeren aus den folgenden Gruppen: PET, PLA, PBT, PPT, PA, PEEK, PPS, Polyether-Polyester-Blockpolymer, Polyether-Polyamid-Blockpolymer, TPU, PVDF, andere fluorierte Polymere, und/oder Copolymere von einer oder mehreren dieser Verbindungen.

3. Polymersaite nach Ansprüchen 1-2, **dadurch gekennzeichnet, dass** der Alkylbenzylester der 1,2-Carbonsäure aus einem Di-Ester von Phthalsäure oder Phthalsäureanhydrid besteht, mit einerseits einer Benzylgruppe und andererseits einer Alkylgruppe mit 5 bis 12 Kohlenstoffatomen, spezieller mit 7 bis 9 Kohlenstoffatomen.

4. Polymersaite nach einem der vorhergehenden Ansprüche, **dadurch gekennzeichnet, dass** die Alkylgruppe des Alkylbenzylesters, oder eines Derivats davon, aus einer Mischung verschiedener Isomere besteht.

5. Verfahren zur Herstellung einer Polymersaite nach einem oder mehreren der vorhergehenden Ansprüche, **dadurch gekennzeichnet, dass** der Alkylbenzylester im Voraus mindestens einem geschmolzenen Polymer oder Polymergemisch zugesetzt wird, um ein homogenes thermoplastisches Gemisch zu erzeugen, wobei der Alkylbenzylester in einer Konzentration zwischen 0,1 bis 5 Gewichtsprozent, noch besser zwischen 0,3 bis 4 Gewichtsprozent, noch besser zwischen 0,3 bis 1,2 Gewichtsprozent, zugesetzt wird.

6. Verfahren nach Anspruch 5, **dadurch gekennzeichnet, dass** mindestens ein Polymer oder Polymergemisch ausgewählt wird aus der Gruppe von Polymeren, bestehend aus PET, PLA, PBT, PPT, PA, PEEK, PPS, Polyether-Polyester-Blockpolymer, Polyether-Polyamid-Blockpolymer, TPU, PVDF, anderen fluorierten Polymeren, und/oder Copolymeren von einer oder mehreren dieser Verbindungen.

7. Verfahren nach einem der Ansprüche 5-6, **dadurch gekennzeichnet, dass** das thermoplastische Gemisch danach extrudiert wird und das extrudierte Gemisch weiter gekühlt wird, um eine Saite zu bilden, die dann gereckt und danach wieder relaxiert wird, um schließlich auf eine Spule oder dergleichen aufgewickelt zu werden.

8. Verfahren nach einem der Ansprüche 5-7, **dadurch gekennzeichnet, dass** die produzierte Saite schließlich einer Oberflächenbehandlung unterzogen wird, beispielsweise einer Plasmabehandlung, um die Oberflächeneigenschaften zu verbessern oder anzupassen.

## Revendications

1. Cordage polymère constitué, à titre principal, mais non de manière exclusive, par un ou plusieurs polymères, **caractérisé en ce qu'**au moins un polymère est constitué d'une matière thermoplastique dans laquelle au moins un ester alkylbenzylique d'un acide 1,2-dicarboxylique ou un de ses dérivés est distribué de manière homogène, **en ce que** la chaîne alkyle de l'ester alkylbenzylique ou d'un de ses dérivés est constituée par au moins cinq atomes de carbone et **en ce qu'**on l'utilise en une concentration entre 0,1 et 5 % en poids, mieux entre 0,3 et 4 % en poids et encore mieux entre 0,3 et 1,2 % en poids.

2. Cordage polymère selon la revendication 1, **caractérisé en ce qu'**il est construit complètement ou en partie à partir de polymères thermoplastiques en collaboration ou non avec des élastomères thermoplastiques, en particulier à partir d'un ou de plusieurs polymères choisis parmi les groupes suivants : du PET, du PLA, du PBT, du PPT, du PA, du PEEK, du PPS, un polymère séquencé de polyéther-polyester, un polymère séquencé de polyéther-polyamide, du TPU, du PVDF, d'autres polymères fluorés et/ou des copolymères d'un ou de plusieurs de ces composés.

3. Cordage polymère selon les revendications 1 à 2, **caractérisé en ce que** l'ester alkylbenzylique de l'acide 1,2-carboxylique est constitué d'un diester de l'acide phtalique ou d'anhydride de l'acide phtalique avec d'une part un groupe benzyle et d'autre part un groupe alkyle contenant de 5 à 12 atomes de carbone, en particulier contenant de 7 à 9 atomes de carbone.

4. Cordage polymère selon l'une quelconque des revendications précédentes, **caractérisé en ce que** le groupe alkyle de l'ester alkylbenzylique ou un de ses dérivés est constitué d'un mélange de divers isomères.

5. Procédé pour la fabrication d'un cordage polymère selon une ou plusieurs des revendications précédentes, **caractérisé en ce qu'**on ajoute l'ester alkylbenzylique à l'avance à au moins un polymère ou à un mélange de polymères en fusion pour la création d'un mélange thermoplastique homogène, l'ester alkylbenzylique étant ajouté en une concentration entre 0,1 et 5 % en poids, mieux entre 0,3 et 4 % en poids, encore mieux entre 0,3 et 1,2 % en poids.

6. Procédé selon la revendication 5, **caractérisé en ce qu'**au moins un polymère ou un mélange de polymères est choisi parmi le groupe de polymères constitué par du PET, du PLA, du PBT, du PPT, du PA, du PEEK, du PPS, un polymère séquencé de polyéther-polyester, un polymère séquencé de polyéther-polyamide, du TPU, du PVDF, d'autres polymères fluorés et/ou des copolymères d'un ou de plusieurs de ces composés.

7. Procédé selon l'une quelconque des revendications 5 à 6, **caractérisé en ce qu'**on extrude ensuite le mélange thermoplastique et on soumet le mélange extrudé à un refroidissement ultérieur pour la création d'un cordage qui est alors soumis à un étirage avant d'être à nouveau relâché pour être en définitive enroulé sur une bobine ou quelque chose de similaire.

8. Procédé selon l'une quelconque des revendications 5 à 7, **caractérisé en ce que** le cordage obtenu est soumis finalement à un traitement de surface, par exemple un traitement au plasma, afin d'améliorer ou de régler les caractéristiques de la surface.
